# EUROPÄISCHE PATENTANMELDUNG

(11) **EP 2 336 954 A1**
(43) Veröffentlichungstag der Anmeldung: **22.06.2011**
(21) Anmeldenummer: 10195358.6
(22) Anmeldetag: 16.12.2010
(51) Int. Cl.: G06Q 10/00, A63B 71/06

(54) **Trainingshilfe**

(30) Priorität: 18.12.2009 DE 202009017296 U
(71) Anmelder: ISW Industrie- Service und Warenhandelsgesellschaft mbH, 45470 Mülheim a. d. Ruhr (DE)
(72) Erfinder: Jahr, Siegfried, 45470, Mülheim a. d. Ruhr (DE)
(74) Vertreter: Frank, Hartmut

(57) **Zusammenfassung**

Die vorliegende Erfindung betrifft eine Trainingshilfe zur Optimierung des Trainingsablaufes, insbesondere in einem Fitnessstudio. Eine erfindungsgemäße Trainingshilfe (1) weist eine Signalerzeugungseinheit (10) und einen Controller (20) auf, welcher dazu ausgelegt ist, die Signalerzeugungseinheit (10) derart anzusteuern, dass diese in Reaktion auf ein Startsignal wenigstens zwei von einer trainierenden Person wahrnehmbare Signale in einem vorbestimmten zeitlichen Abstand erzeugt.

## Beschreibung

Die vorliegende Erfindung betrifft eine Trainingshilfe zur Optimierung des Trainingsablaufes, insbesondere in einem Fitnessstudio.

Beim Training in einem Fitnessstudio ist es -neben einer Orientierung an der Anzahl von Wiederholungen während einer Trainingsübung- auch eine gängige Methode, die zeitliche Dauer der Trainingsübung zu kontrollieren. Ein Vorteil letztgenannter Methode besteht darin, dass die trainierende Person weniger leicht der Versuchung unterliegt, infolge einer Orientierung allein an der Wiederholungsanzahl ein eher oberflächliches bzw. unkontrolliertes Training zu absolvieren.

Dabei tritt in der Praxis jedoch das Problem auf, dass eine Kontrolle der zeitlichen Übungsdauer etwa mithilfe einer Armbanduhr in der Regel zumindest während der Übung selbst unkomfortabel ist (insbesondere an einem mit den Armen zu bedienenden Trainingsgerät) und auch das Ablesen einer Wanduhr häufig nicht möglich ist. Infolgedessen kann die trainierende Person mitunter eine Zeitkontrolle nur unmittelbar vor Beginn sowie nach Beendigung der Übung durchführen, was zum einen lästig und zum anderen auch wenig zuverlässig ist.

Vor dem obigen Hintergrund ist es eine Aufgabe der vorliegenden Erfindung, eine Trainingshilfe zur Optimierung des Trainingsablaufes, insbesondere in einem Fitness-Studio, bereitzustellen, welche eine zugleich komfortable wie zuverlässige Steuerung des Trainings ermöglicht.

Diese Aufgabe wird durch die Merkmale des unabhängigen Patentanspruchs 1 gelöst.

Eine erfindungsgemäße Trainingshilfe weist auf:
- eine Signalerzeugungseinheit, und
- einen Controller, welcher dazu ausgelegt ist, die Signalerzeugungseinheit derart anzusteuern, dass diese in Reaktion auf ein Startsignal wenigstens zwei von einer trainierenden Person wahrnehmbare Signale in einem vorbestimmten zeitlichen Abstand erzeugt.

Infolge des Vorhandenseins der in der erfindungsgemäßen Weise über einen Controller angesteuerten Signalerzeugungseinheit wird eine mit der Trainingshilfe trainierende Person in komfortabler Weise in die Lage versetzt, ein an der zeitlichen Dauer orientiertes Training basierend auf durch die Signalerzeugungseinheit erzeugten Signalen durchzuführen.

Dabei kann ein erstes Signal beispielsweise den Start der Trainingsübung signalisieren, und ein zweites Signal kann nach einer gewissen Soll-Trainingsdauer (beispielsweise nach 60 Sekunden) erfolgen, die so gewählt ist, dass ein Erreichen des Ablaufs dieser Zeitspanne bzw. das Auslösen des zweiten Signals darauf hinweist, dass der aktuell von der trainierenden Person eingestellte Schwierigkeitsgrad bzw. das gewählte Gewicht bei dem nächsten Übungssatz erneut eingestellt werden kann.

Die trainierende Person erhält diese Information in komfortabler Weise über die besagten Signale und ohne - wie vorstehend beschrieben in der Regel problematische - Zeitablesungen bzw. Berechnungen vornehmen zu müssen.

Gemäß einer bevorzugten Ausführungsform ist die Signalerzeugungseinheit ein Vibrationsmotor, wobei die Signale Vibrationsphasen dieses Vibrationsmotors entsprechen.

Die Signalisierung der entsprechenden Zeitspannen über Vibrationsphasen hat etwa im Vergleich zu einer akustischen Signalisierung den weiteren Vorteil, dass die Signalisierung durch den gerade in einem Fitnessstudio häufig vorhandenen Geräuschpegel (verursacht etwa durch Hintergrundmusik, gegebenenfalls von der trainierenden Person selbst verwendete Kopfhörer etc.) nicht beeinträchtigt bzw. überlagert wird. Umgekehrt wird auch eine Störung anderer Personen vermieden, da nur die trainierende Person selbst die Vibration wahrnimmt. Im Ergebnis wird auf diese Weise eine zugleich komfortable wie zuverlässige Steuerung des Trainings ermöglicht.

Wenngleich die Ausgestaltung der Signalerzeugungseinheit als Vibrationsmotor aus den vorstehenden Gründen vorteilhaft ist, ist die Erfindung nicht hierauf beschränkt. Vielmehr sollen auch solche Ausgestaltungen von der Erfindung umfasst sein, bei denen die Signalisierung in anderer von der trainierenden Person wahrnehmbarer Weise, insbesondere optisch oder akustisch, erfolgt.

Gemäß einer Ausführungsform ist der Controller dazu ausgelegt, die Signalerzeugungseinheit derart anzusteuern, dass diese in Reaktion auf das Startsignal wenigstens drei Signale in jeweils vorbestimmten zeitlichen Abständen erzeugt. Diese Ausgestaltung ermöglicht es, der trainierenden Person zusätzlich den Ablauf einer weiteren Zeitspanne zu signalisieren, die so gewählt sein kann, dass ein Erreichen bzw. Überschreiten dieser Zeitspanne während der Übung darauf hinweist, dass der Schwierigkeitsgrad bzw. das Gewicht bei der nächsten Trainingseinheit um eine bestimmte Stufe (z.B. 5%) gesteigert werden kann. Auf diese Weise wird die trainierende Person in komfortabler und zuverlässiger Weise bei einer noch effizienteren Durchführung des Trainings unterstützt.

Gemäß einer Ausführungsform ist der Controller zum Betrieb in wenigstens zwei unterschiedlichen Betriebsmodi ausgelegt, welche sich hinsichtlich der zeitlichen Abstände zwischen den Signalen voneinander unterscheiden. Auf diese Weise wird eine erhöhte Flexibilität bezüglich der Verwendbarkeit der erfindungsgemäßen Trainingshilfe insoweit geschaffen, als - je nach den konkreten vom Fitnessstudio empfohlenen Varianten - beispielsweise in einem ersten Betriebsmodus die der "Soll-Trainingsdauer" entsprechende Zeitspanne zu 60 Sekunden und die eine Steigerung des Schwierigkeitsgrades bzw. Gewichts nahelegende Zeitspanne zu 90 Sekunden gewählt sein kann, wohingegen in einem zweiten Betriebsmodus diese Zeitspannen beispielsweise zu 90 bzw. 120 Sekunden gewählt sein können.

Weitere Ausgestaltungen der Erfindung sind der Beschreibung sowie den Unteransprüchen zu entnehmen.

Die Erfindung wird nachfolgend anhand bevorzugter Ausführungsbeispiele unter Bezugnahme auf die beigefügten Abbildungen näher erläutert.

Es zeigen:
- Figur 1: eine schematische Darstellung einer in einer erfindungsgemäßen Trainingshilfe vorgesehenen Schaltungsanordnung gemäß einer Ausführungsform; und
- Figur 2: eine lediglich schematische, perspektivische Skizze zur Erläuterung des Aufbaus einer Trainingshilfe gemäß einer Ausführungsform der Erfindung.

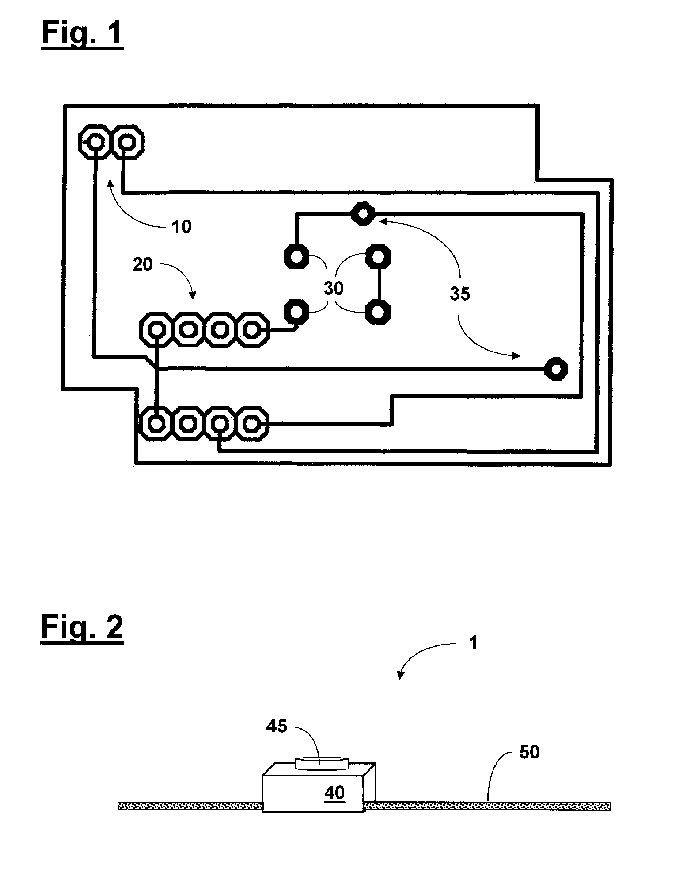

Gemäß Fig. 1 umfasst eine in einer erfindungsgemäßen Trainingshilfe vorhandene Schaltungsanordnung eine im Ausführungsbeispiel als Vibrationsmotor ausgestaltete Signalerzeugungseinheit 10 sowie einen Controller 20, welcher z.B. als 8-Bit-Mikrocontroller vom AVR-Typ ausgestaltet sein kann und im Ausführungsbeispiel eine RISC-Architektur aufweist. Des Weiteren ist ein Schalter 30 vorgesehen, welcher gemäß Ansteuerung durch den Controller 20 die Signale der Signalerzeugungseinheit 10 bzw. die Vibrationsphasen des Vibrationsmotors auslöst. Mit "35" ist eine Batterie (mit Knopfzellenhalter) bezeichnet. Ferner können sind eine oder mehrere Befestigungsbohrungen (nicht dargestellt) zur Befestigung der Schaltungsanordnung z.B. an einem in Fig. 2 dargestellten Gehäuse vorgesehen sein.

Gemäß Fig. 2 kann die gesamte Schaltungsanordnung einschließlich der Signalerzeugungseinheit 10 und des Controllers 20 in einem gemeinsamen Gehäuse 40 untergebracht sein, welches an einem am Handgelenk eines Benutzers tragbaren Armband 50 befestigt ist und eine Drucktaste 45 (zur Betätigung des Schalters 30) aufweist, über welche zum einen der beabsichtigte Start der Übung (und somit die Einleitung der erfindungsgemäßen Signalerzeugung) vom Benutzer ausgelöst werden kann.

Zum anderen kann die Drucktaste 45 von der trainierenden Person auch (etwa durch länger anhaltendes Betätigen, z.B. für wenigstens 3 Sekunden) dazu genutzt werden, um einen Wechsel des Betriebsmodus vornehmen, wobei sich die unterschiedlichen Betriebsmodi wie vorstehend erläutert hinsichtlich der zeitlichen Abstände zwischen den Signalen bzw. Vibrationsphasen voneinander unterscheiden.

Dabei kann der jeweils aktuell durch Betätigen der Drucktaste 45 eingestellte Betriebsmodus dem Benutzer vorzugsweise wiederum ebenfalls über Signale der Signalerzeugungseinheit 10 (im Beispiel also Vibrationssignale) angezeigt werden, wobei beispielsweise eine einfache Vibrationsphase auf einen "Betriebsmodus 1" (z.B. mit Signalen nach 5, 60 und 90 Sekunden) hinweisen kann, und zwei kurz aufeinanderfolgende Vibrationsphasen auf einen "Betriebsmodus 2" (z.B. mit Signalen nach 5, 90 und 120 Sekunden) hinweisen können. Dabei ist die Schaltungsanordnung so gewählt, dass der entsprechende Betriebsmodus auch bei einem Batteriewechsel erhalten bleibt.

### Bezugszeichenliste

- 1: Trainingshilfe
- 10: Signalerzeugungseinheit
- 20: Controller
- 30: Schalter
- 35: Batterie
- 40: Gehäuse
- 45: Drucktaste
- 50: Armband

## Patentansprüche

1. Trainingshilfe (1), mit:
• einer Signalerzeugungseinheit (10); und
• einem Controller (20), welcher dazu ausgelegt ist, die Signalerzeugungseinheit (10) derart anzusteuern, dass diese in Reaktion auf ein Startsignal wenigstens zwei von einer trainierenden Person wahrnehmbare Signale in einem vorbestimmten zeitlichen Abstand erzeugt.

2. Trainingshilfe (1) nach Anspruch 1, **dadurch gekennzeichnet, dass** die Signalerzeugungseinheit (10) ein Vibrationsmotor ist.

3. Trainingshilfe (1) nach Anspruch 1 oder 2, **dadurch gekennzeichnet, dass** der Controller (20) dazu ausgelegt ist, die Signalerzeugungseinheit (10) derart anzusteuern, dass diese in Reaktion auf das Startsignal wenigstens drei von der trainierenden Person wahrnehmbare Signale in jeweils vorbestimmten zeitlichen Abständen erzeugt.

4. Trainingshilfe (1) nach einem der Ansprüche 1 bis 3, **dadurch gekennzeichnet, dass** der Controller (20) zum Betrieb in wenigstens zwei unterschiedlichen Betriebsmodi ausgelegt ist, welche sich hinsichtlich der zeitlichen Abstände zwischen den Signalen voneinander unterscheiden.

5. Trainingshilfe (1) nach einem der vorhergehenden Ansprüche, **dadurch gekennzeichnet, dass** die Signalerzeugungseinheit (10) und der Controller (20) in einem gemeinsamen Gehäuse (40) untergebracht sind.

6. Trainingshilfe (1) nach Anspruch 5, **dadurch gekennzeichnet, dass** diese ferner ein am Handgelenk eines Benutzers tragbares Armband (50) aufweist, an welchem das Gehäuse (40) befestigt ist.

7. Trainingshilfe (1) nach einem der Ansprüche 4 bis 6, **dadurch gekennzeichnet, dass** diese ferner eine Drucktaste (45) aufweist, über deren Betätigung wahlweise ein Erzeugen des Startsignals oder ein Wechsel zwischen den Betriebsmodi hervorrufbar ist.

8. Trainingshilfe (1) nach einem der vorhergehenden Ansprüche, **dadurch gekennzeichnet, dass** der Controller (20) dazu ausgelegt ist, die Signalerzeugungseinheit (10) derart anzusteuern, dass diese in Reaktion auf das Startsignal ein erstes von der trainierenden Person wahrnehmbares Signal nach einer Zeitspanne im Bereich zwischen 0 und 20 Sekunden, insbesondere im Bereich zwischen 0 und 10 Sekunden, gerechnet vom Startsignal erzeugt.

9. Trainingshilfe (1) nach einem der vorhergehenden Ansprüche, **dadurch gekennzeichnet, dass** der Controller (20) dazu ausgelegt ist, die Signalerzeugungseinheit (10) derart anzusteuern, dass diese in Reaktion auf das Startsignal ein von der trainierenden Person wahrnehmbares Signal nach einer Zeitspanne im Bereich zwischen 50 und 70 Sekunden, insbesondere im Bereich zwischen 55 und 65 Sekunden, gerechnet vom Startsignal erzeugt.

10. Trainingshilfe (1) nach einem der vorhergehenden Ansprüche, **dadurch gekennzeichnet, dass** der Controller (20) dazu ausgelegt ist, die Signalerzeugungseinheit (10) derart anzusteuern, dass diese in Reaktion auf das Startsignal ein von der trainierenden Person wahrnehmbares Signal nach einer Zeitspanne im Bereich zwischen 80 und 100 Sekunden, insbesondere im Bereich zwischen 85 und 95 Sekunden, gerechnet vom Startsignal erzeugt.

11. Trainingshilfe (1) nach einem der vorhergehenden Ansprüche, **dadurch gekennzeichnet, dass** der Controller (20) dazu ausgelegt ist, die Signalerzeugungseinheit (10) derart anzusteuern, dass diese ein von der trainierenden Person wahrnehmbares Signal nach einer Zeitspanne im Bereich zwischen 110 und 130 Sekunden, insbesondere im Bereich zwischen 115 und 125 Sekunden, gerechnet vom Startsignal erzeugt.
